# EUROPEAN PATENT SPECIFICATION

(11) **EP 2 896 654 B1**
(45) Date of publication and mention of the grant of the patent: **12.07.2017**
(21) Application number: 12884738.1
(22) Date of filing: 14.09.2012
(51) Int. Cl.: C08L 63/00, C08G 59/40, C08G 59/42, C08G 59/32, B32B 15/092, B32B 27/04

(54) **EPOXY RESIN COMPOUND, AND, PREPREG AND COPPER-CLAD LAMINATE MANUFACTURED USING THE COMPOUND**
EPOXIDHARZVERBINDUNG UND PREPREG SOWIE UNTER VERWENDUNG DIESER VERBINDUNG HERGESTELLTES PLATTIERTES KUPFERLAMINAT
COMPOSÉ DE RÉSINE ÉPOXY AINSI QUE STRATIFIÉ DE PRÉ-IMPRÉGNÉ ET DE CUIVRE FABRIQUÉ À L'AIDE DU COMPOSÉ

(43) Date of publication of application: 22.07.2015
(73) Proprietor: Shengyi Technology Co. Ltd., Dongguan City, Guangdong 523808 (CN)
(72) Inventor: ZENG, Xianping, Dongguan City Guangdong 523808 (CN); REN, Nana, Dongguan City Guangdong 523808 (CN)
(74) Representative: Wallinger, Michael
(86) International application number: PCT/CN2012/081367
(87) International publication number: WO 2014/040261

(56) References cited:
- EP-A1- 2 706 091
- EP-A1- 2 896 653
- WO-A1-01/37991
- CN-A- 102 112 544
- CN-A- 102 137 758
- CN-A- 102 300 901
- CN-A- 102 443 138
- JP-A- 2009 242 559
- US-A1- 2011 139 496

## Description

### Technical field

The present invention relates to the field of printed circuit boards, especially to an epoxy resin composition, and a prepreg and a copper-clad laminate made by using same.

### Background

Along with the high speed and multi-functionalization in information processing of electronic products, application frequency constantly increases and 3-6 GHz will become mainstream. Except for maintaining higher requirements for heat resistance of laminate materials, requirements for their dielectric constant and dielectric loss value may be increasingly low. Existing conventional epoxy glass fiber cloth laminates (FR-4) can hardly satisfy the use demand for high frequency and high speed development of electronic products, meanwhile baseboard materials no longer play a part as a mechanical support under traditional meaning, but as a printed circuit board (PCB) and an important approach to improve product performances by terminal manufacturer designers together with electronic components. Since a high dielectric constant (DK) may lower the signal transmission rate and a high dielectric loss value (Df) can make the signal partially transform into heat energy lost in the baseboard materials, reducing the dielectric constant/ dielectric loss value has been a popular focus for baseboard providers. Conditional epoxy glass fiber cloth laminate materials generally employ dicyandiamide as a hardener. Such hardener possesses good processing operability due to having a tertiary reactive amine. However, as its carbon-nitrogen bond is weak, likely to crack at a high temperature, the thermal decomposition resistance temperature of cured products is resulting low, which is unable to meet the heat resistance requirement of lead-free process. Under this background, along with the large scale implementation of the lead-free process in 2006, phenolic resins were started to be used as epoxy resin hardeners in the industry. phenolic resins have a benzene ring heat resistant structure of high density, therefore the heat resistance of post-curing system of epoxy resins is excellent but simultaneously there emerges a trend of degeneration in dielectric performances of cured products.

Japanese patents 2002-012650 and 2003-082063 have put forward synthesizing a series of active ester hardeners containing benzene ring, naphthalene ring or diphenyl structures such as IAAN, IABN, TriABN and TAAN, as hardeners for epoxy resins. The resulting cured products can obviously decrease the dielectric constant and dielectric loss value thereof compared to traditional phenolic resins.

Japanese patent 2003-252958 has put forward that employing diphenyl-type epoxy resins and active esters as hardeners may obtain cured products with decreased dielectric constant and dielectric loss value. However, since the epoxy resins in use are bifunctional and the curing cross-linking density of the active esters is small, the heat resistance of cured products is low as well as the glass transition temperature.

Japanese patent 2004-155990 uses aromatic carboxylic acids to be reacted with aromatic phenols to obtain an active ester hardener with multifunctionality .Using the active ester hardener to cure novolac epoxy resins can obtain cured products with higher heat resistance, lower dielectric constant and dielectric loss value.

Japanese patent 2009-235165 has put forward a novel multifunctional active ester hardener, which cures an epoxy resin containing an aliphatic structure, thereby obtaining cured products having higher glass transition temperature and lower dielectric constant and dielectric loss value simultaneously.

Japanese patent 2009-040919 has put forward a thermosetting resin composition with stable dielectric constant and excellent adhesion of conductive layer, the main components of which include an epoxy resin, an active ester hardener, a curing accelerator and an organic solvent. The resulting cured products have good adhesion to copper foil, low dielectric constant and dielectric loss value. It has been studied on the amounts of the epoxy resin and the active ester but has not been studied on the relationship between the structure and the performance of the epoxy resin and the active ester.

In addition, Japanese patents 2009-242559, 2009-242560, 2010-077344 and 2010-077343 have put forward respectively employing alkylated phenol or alkylated naphthol novolac epoxy resins and biphenyl novolac epoxy resins, using active esters as a hardener, can obtain cured products with low hygroscopicity and low dielectric constant and dielectric loss tangent value.

In these current patent technologies above, though all have put forward that using an active ester as an epoxy resin hardener can improve the moisture resistance of the cured products, lower the water absorption rate and reduce the dielectric constant and dielectric loss value of the cured products, the disadvantage thereof is the difficulty in getting a good balance between heat resistance and dielectric performance, which allows the cured products to possess simultaneously a high glass transition temperature and low dielectric loss tangent value, and also allows the dielectric performance to be stable with the variations in frequency and a lower water absorption rate. Meanwhile no studies have been made on how to realize the halogen-free flame retardancy of cured products.

### Summary of the invention

An object of the present invention lies in providing an epoxy resin composition, which is able to provide excellent dielectric performance, moisture-heat resistant performance required by copper-clad laminates and realizes halogen-free flame retardancy, achieving UL 94V-0.

Another object of the present invention lies in providing a prepreg and a copper-clad laminate made by using the above mentioned epoxy resin composition, which have excellent dielectric performance and moisture-heat resistant performance, simultaneously have a high glass transition temperature and a lower water absorption rate and simultaneously realize halogen-free flame retardancy, achieving UL-94V.

In order to achieve these objects above, the present invention provides an epoxy resin composition comprising components as follows: an epoxy resin comprising 3 or more epoxy groups and containing nitrogen in the molecular chain, a phosphinate salt compound and an active ester hardener; the amount of the epoxy resin comprising 3 or more epoxy groups and containing nitrogen in the molecular chain is 100 parts by weight, the amount of the phosphinate salt compound is 5-50 parts by weight. The equivalent ratio of the amount of the active ester hardener, based on the ratio between epoxy equivalent and active ester equivalent, is 0.85-1.2.

The epoxy resin comprising 3 or more epoxy groups and containing nitrogen in the molecular chain is at least one of the epoxy resins having the following structural formula: 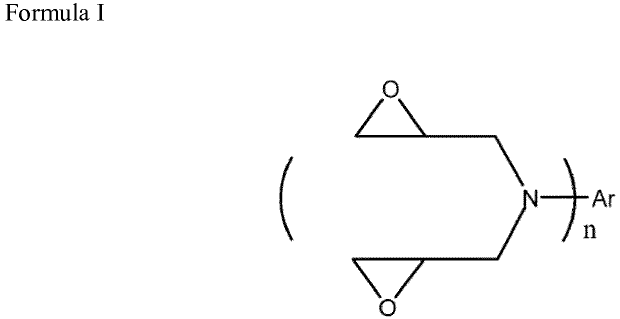 wherein, n is an integer value of 1-3; Ar is: 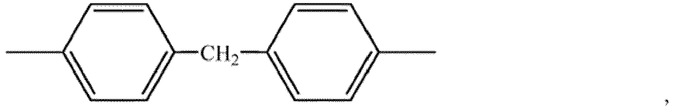 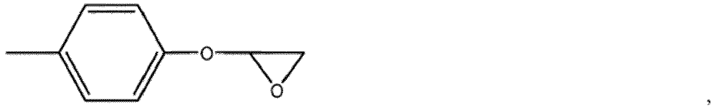 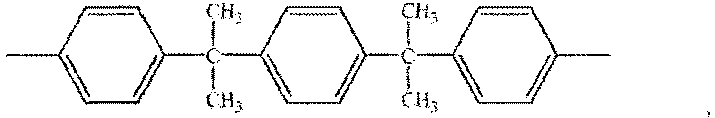 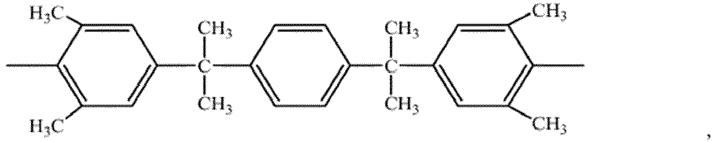 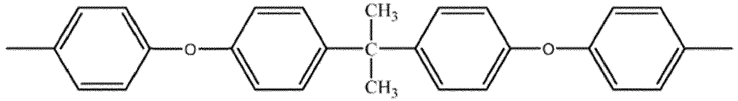 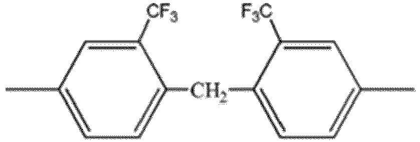 or

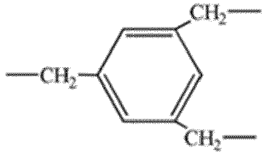

The active ester hardener is obtained by reacting a phenolic compound linked by an aliphatic cyclic hydrocarbon structure, a bifunctional carboxylic acid aromatic compound or an acidic halide with a mono-hydroxyl compound.

The amount of the bifunctional carboxylic acid aromatic compound or the acidic halide is 1 mol. The amount of the phenolic compound linked by an aliphatic cyclic hydrocarbon structure is 0.05-0.75mol. The amount of the mono-hydroxyl compound is 0.25-0.95mol.

The active ester hardener has the following structural formula: 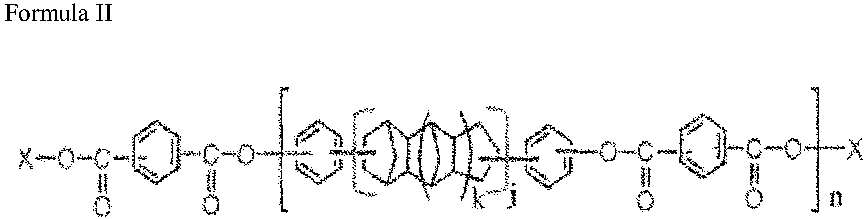 wherein, X is a benzene ring or a naphthalene ring, j is 0 or 1, k is 0 or 1, n is 0.25-2.5.

The phosphinate salt compound has the following structural formula: 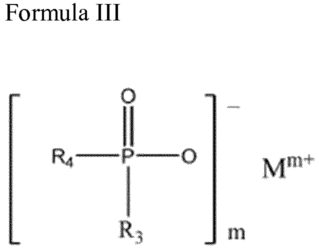 wherein, m is 2 or 3; R₃, R₄ is an alkane group or an aromatic hydrocarbon group with 1-6 carbon atoms; M is a metal atom, which is chosen from one of calcium, magnesium, aluminum, arsenic, zinc, and iron.

Further, the epoxy resin composition also comprises a curing accelerator. The curing accelerator is one or a mixture of imidazoles and derivatives thereof, piperidine compounds, Lewis acids, and triphenylphosphine.

Still further, the epoxy resin composition also comprises an organic filler, an inorganic filler, or a mixture of organic filler and inorganic filler. The amount of the filler, relative to the total 100 parts by weight of the epoxy resin, the active ester hardener and the phosphinate salt compound, is 5-500 parts by weight.

The inorganic filler is one or more selected from crystalline silica, melting silica, spherical silica, hollow silica, glass powder, aluminum nitride, boron nitride, silicon carbide, aluminum hydroxide, titanium dioxide, strontium titanate, barium titanate, aluminum oxide, barium sulfate, talcum powder, calcium silicate, calcium carbonate, and mica; the organic filler is one or more selected from polytetrafluoroethylene powder, polyphenylene sulfide, and polyether sulfone powder.

Meanwhile, the present invention also provides a prepreg made by using the epoxy resin composition above, including a reinforcing material and the epoxy resin composition attached thereon after being impregnated and dried.

Further, the present invention also provides a copper-clad laminate made by using the prepreg above, comprising several laminated prepregs and copper foils covered on one or both sides of the laminated prepregs.

The beneficial effects of the present invention: firstly, the epoxy resin composition described in the present invention employs an epoxy resin containing nitrogen in the molecular chain, which has higher functionality. As containing nitrogen, it can exhibit synergistic flame retardant effect together with the phosphorus in the active ester hardener, and can reach flame retardant requirements in a condition of minimizing using phosphorus flame retardant at the same time of providing high heat resistance; additionally, the epoxy resin composition of the present invention uses active ester as a hardener, which fully exerts the advantage that reacting active ester and epoxy resin does not generate polar groups thereby the dielectric performance is excellent and the moisture-heat resistance is good after being cured, and uses a phosphinate salt compound as a flame retardant, which realizes halogen-free flame retardancy without losing the heat resistance, low water absorption and excellent dielectric performance of the original cured products. The flame retardancy of the cured products reaches UL94V-0 degree; finally, the prepreg and copper-clad laminate made by using the abovementioned epoxy resin composition of the invention have excellent dielectric performance and moisture-heat resistance, the flame retardancy of which reaches UL94V-0 degree.

### Detailed description of the invention

For further illustrating the technical means adopted by the present invention and the effects thereof, hereinafter it is described in combination with preferred embodiments of the present invention in detail.

The present invention provides an epoxy resin composition, comprising components as follows: an epoxy resin comprising 3 or more epoxy groups and containing nitrogen in the molecular chain, a phosphinate salt compound and an active ester hardener.

The epoxy resin comprising 3 or more epoxy groups and containing nitrogen in the molecular chain is at least one of the epoxy resins having the following structural formula: 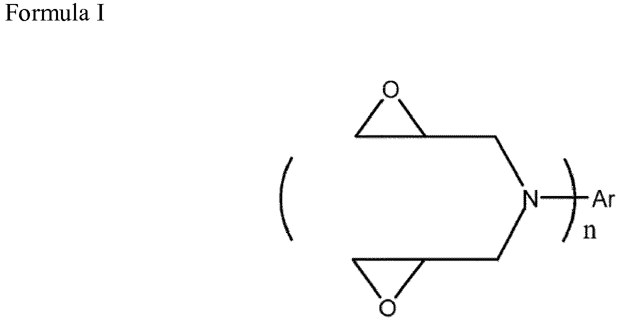 wherein, n is an integer value of 1-3, Ar is: 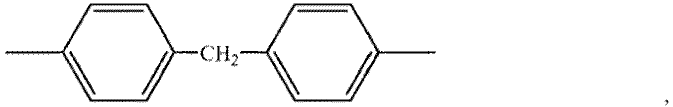 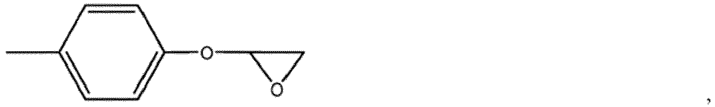 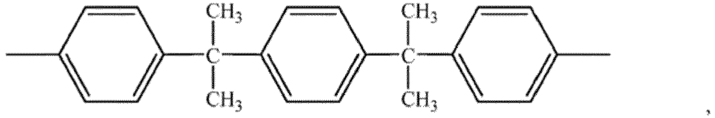 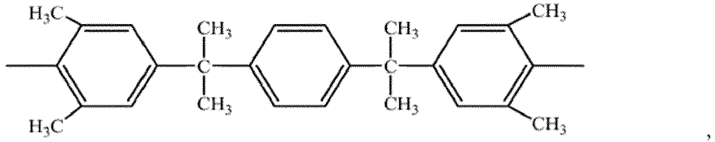 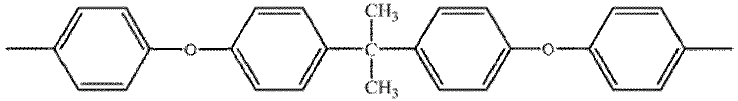 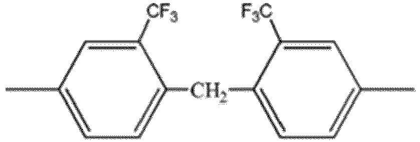 or

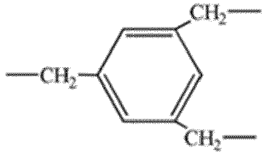

The structural formula of the nitrogen-containing epoxy resin of the present invention is specifically as follows:

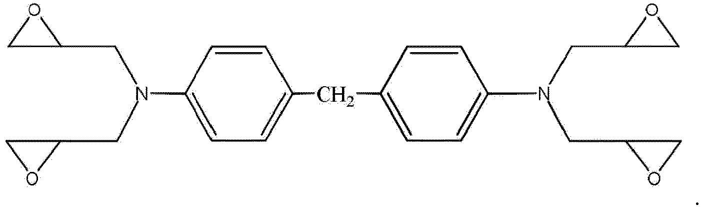

The structural formula of the nitrogen-containing epoxy resin of the present invention specifically may also be as follows:

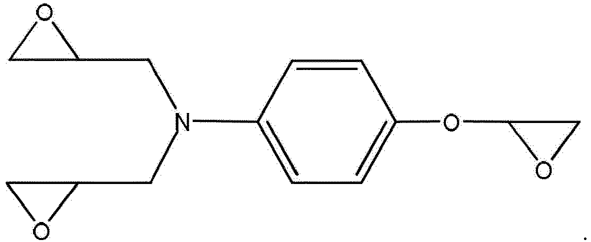

The structural formula of the nitrogen-containing epoxy resin of the present invention specifically may also be as follows:

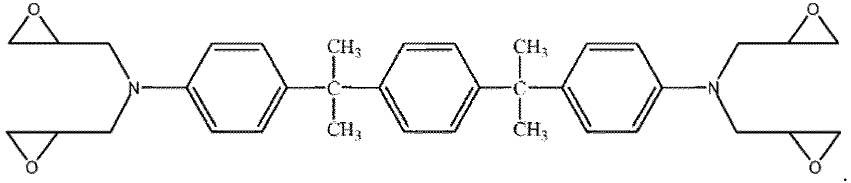

The structural formula of the nitrogen-containing epoxy resin of the present invention specifically may also be as follows:

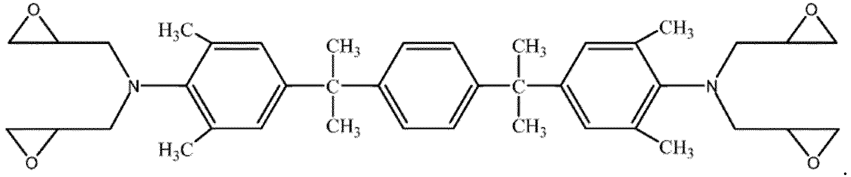

The structural formula of the nitrogen-containing epoxy resin of the present invention specifically may also be as follows:

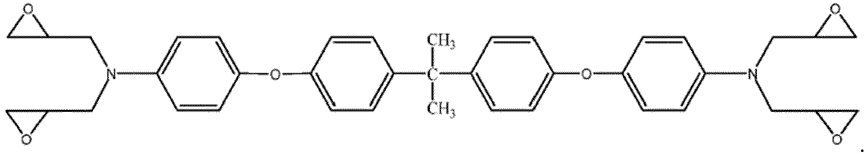

The structural formula of the nitrogen-containing epoxy resin of the present invention specifically may also be as follows:

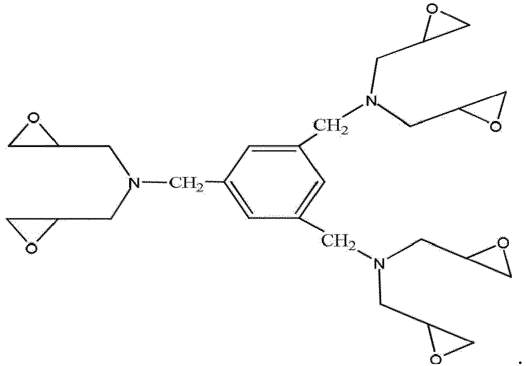

The structural formula of the nitrogen-containing epoxy resin of the present invention specifically may also be as follows:

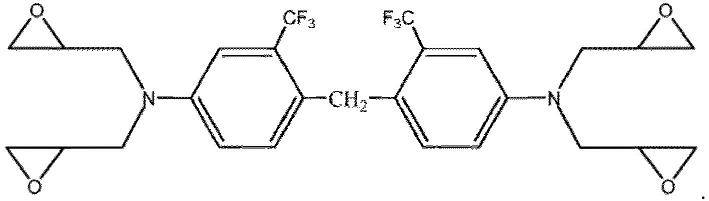

In the epoxy resin composition of the present invention, the active ester hardener is obtained by reacting a phenolic compound linked by an aliphatic cyclic hydrocarbon structure and a bifictionality carboxylic acid aromatic compound or an acidic halide and a mono-hydroxyl compound. The active ester mainly functions on curing the epoxy resin. Since no additional hydroxyl group is generated after the curing of the epoxy resin with it, basically no hydroxyl polar group exists in the cured products, thus having good dielectric performance and low water absorption and good moisture-heat resistance.

The amount of the bifunctional carboxylic acid aromatic compound or the acidic halide is 1 mol. The amount of the phenolic compound linked by an aliphatic cyclic hydrocarbon structure is 0.05-0.75mol. The amount of the mono-hydroxyl compound is 0.25-0.95mol.

The bifunctional carboxylic compound can be a compound having the following structural formula: 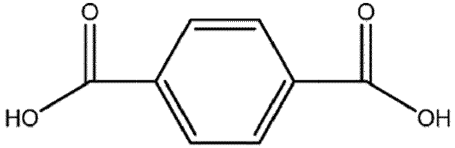 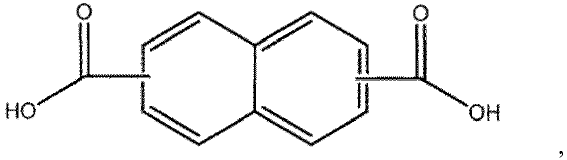 or

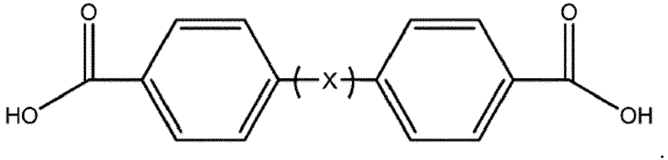

The structure of the phenolic compound linked by an aliphatic cyclic hydrocarbon structure is as follows: 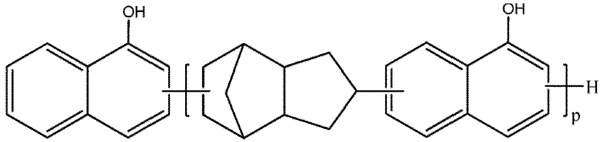 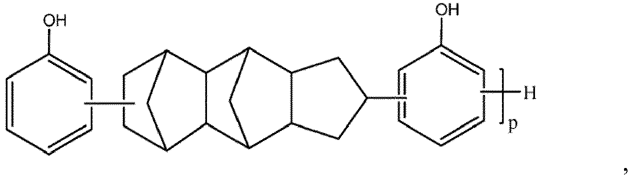 or

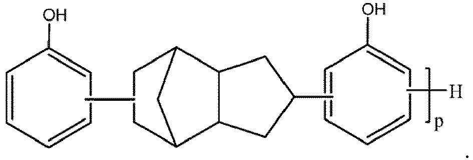

The structural formula of the active ester hardener is as follows: 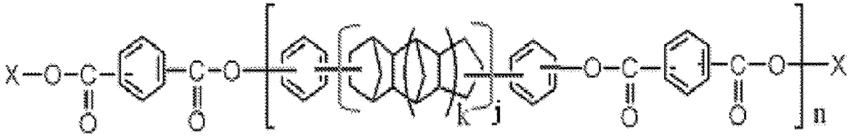 wherein, X is a benzene ring or a naphthalene ring, j is 0 or 1, k is 0 or 1, n is 0.25-2.5.

The amount of the active ester hardener, based on 100 parts by weight of the epoxy resin comprising 3 or more epoxy groups and containing nitrogen, and also based on the ratio between epoxy equivalent and active ester equivalent, the equivalent ratio is 0.85-1.2, preferred to be 0.9-1.1, and more preferred to be 0.95-1.05.

In the epoxy resin composition of the present invention, the phosphinate salt compound has the following structural formula: 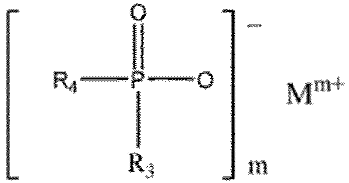 wherein, m is 2 or 3; R₃, R₄ is an alkane group or an aromatic hydrocarbon group with 1-6 carbon atoms; M is a metal atom, which is chosen from one of calcium, magnesium, aluminum, arsenic, zinc, and iron. From the viewpoint of reducing its water absorption rate and having higher phosphorus content, M is preferably aluminum or sodium. However, if further consideration is made to minimize the effects on dielectric properties of the resin composition after curing by adding flame retardant, M is preferably aluminum.

For further description, the phosphinate salt compound of the present invention could be the compound that has the following structural formula: 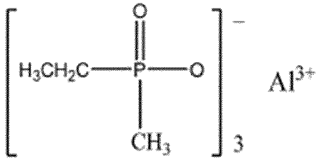 or

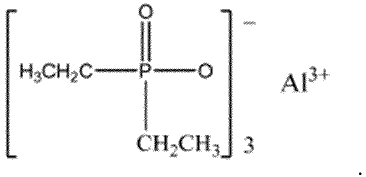

The object of the phosphinate salt compound of the present invention is for flame retardancy, the amount of which has no specific limitation, only if the cured product could reach UL 94 V-0. However, in order to ensure better overall performance like heat resistance and hydrolysis resistance of the cured products, the addition amount of the phosphinate salt compound, based on the total 100 parts by weight of the epoxy resin, the active ester hardener and the phosphinate salt compound, is 5-50 parts by weight, more preferred to be 10-40 parts by weight, most preferred to be 10-30 parts by weight.

Only if it can catalyze the reactions of epoxy functional groups and reduce the reaction temperature of curing system, no specific restriction is made to the curing accelerator and it is preferred to be one or more selected from imidazole compounds and derivatives thereof, piperidine compounds, Lewis acids, and triphenylphosphine, or combinations thereof The imidazole compounds may be exemplified as 2-methylimidazole, 2-phenylimidazole, or 2-ethyl-4-methylimidazole. The piperidine compounds may be exemplified as 2,3-diaminopiperidine, 2,5-diaminopiperidine, 2,6-diaminopiperidine, 2,5-diamino, 2-amino-3-methyl-piperidine, 2-amino-4-4 methyl piperidine, 2-amino-3-nitropiperidine, 2-amino-5-nitropiperidine, or 4-dimethylaminopiperidine. The amount of the curing accelerator, based on the total 100 parts by weight of the epoxy resin, the active ester hardener and the phosphinate salt compound, is 0.05-1.0 part by weight.

If needed, an organic filler, an inorganic filler, or a mixture of organic filler and inorganic filler can be further comprised in the present invention. No specific restriction is made to the filler added depending on the need. The inorganic filler can be one or more selected from crystalline silica, melting silica, spherical silica, hollow silica, glass powder, aluminum nitride, boron nitride, silicon carbide, aluminum hydroxide, titanium dioxide, strontium titanate, barium titanate, aluminum oxide, barium sulfate, talcum powder, calcium silicate, calcium carbonate, and mica. The organic filler can be one or more selected from polytetrafluoroethylene powder, polyphenylene sulfide, and polyether sulfone powder. In addition, there is no restriction on the shape and particle size of the inorganic filler. In general the particle size is 0.01-50µm, preferred to be 0.01-20µm, and more preferred to be 0.1-10µm. Inorganic filler with such range of particle size is easier to disperse in resin solution. Further, there is no restriction on the amount of the filler, which relative to the total 100 parts by weight of the epoxy resin, the active ester hardener, and the phosphinate salt compound, is 5-500 parts by weight, preferred to be 5-300 parts by weight, more preferred to be 5-200 parts by weight, and even more preferred to be 15-100 parts by weight.

The prepreg made by using the epoxy resin composition above includes a reinforcing material and the epoxy resin composition attached thereon after being impregnated and dried. The reinforcing material employs a reinforcing material in the prior art like glass fiber cloth.

The copper-clad laminate made by using the epoxy resin composition above includes several laminated prepregs and copper foils covered on one or both sides of the laminated prepregs.

A varnish with certain concentration is prepared from the epoxy resin composition of the present invention. By impregnating the reinforcing material and then drying it at a certain temperature, evaporating solvent and half curing the resin composition, a prepreg is obtained. And then one or more aforementioned prepregs are laminated in certain sequence. Copper foils are respectively covered on both sides of the laminated prepregs, cured in a hot press to prepare copper-clad laminates. The curing temperature is 150-250°C and the curing pressure is 25-60Kg/cm².

For the resulting copper-clad laminates above, the dielectric constant and dielectric dissipation factor, glass transition temperature and moisture-heat resistance thereof are measured and further explained and described in detail in the following examples.

### Example 1

100 parts by weight of 4'4-diaminodiphenylmethane tetraglycidyl amino resin KES-224(manufactured by KOLON Corporation, Korea, EEW is 125g/mol) was added into a container, and then 178.4 parts by weight of active ester hardener HPC-8000-65T (manufactured by DIC corporation, Japan, active ester equivalent is 223g/mol) was added and stirred well. 30 parts by weight of flame retardant, an aluminum salt of phosphinate OP935 (manufactured by Clariant corporation, the content of phosphorus is 23%) and then a proper amount of DMAP and a solvent toluene were added, stirred uniformly to form a varnish. The varnish above was impregnated with glass fiber cloth (model number 2116, the thickness is 0.08mm) and controlled to a proper thickness, and then the solvent was evaporated to obtain a prepreg. Several resulting prepregs were laminated, on both sides of which a copper foil was respectively covered, placed into a hot press and cured to produce the copper-clad laminate. For the copper-clad laminate obtained by curing in the hot press, the curing temperature thereof is 200°C, the curing pressure is 30kg/cm² and the curing time is 90min.

### Example 2

100 parts by weight of p-aminophenol triglycidyl amino resin MY0500 (manufactured by Hunstman Corporation, EEW is 110g/mol) was added into a container, and then 192.6 parts by weight of active ester hardener HPC-8000-65T (manufactured by DIC corporation, Japan, active ester equivalent is 223g/mol) was added and stirred well. 25.5 parts by weight of flame retardant, aluminum phosphinate salt OP930 (manufactured by Clariant corporation, the content of phosphorus is 23%) was added. After stirring uniformly, a proper amount of DMAP and a solvent toluene were added, stirred uniformly to form a varnish. The varnish above was impregnated with glass fiber cloth (model number 2116, the thickness is 0.08mm) and controlled to a proper thickness, and then the solvent was evaporated to obtain a prepreg. Several resulting prepregs were laminated, on both sides of which a copper foil was respectively covered, placed into a hot press and cured to produce the copper-clad laminate. For the copper-clad laminate obtained by curing in the hot press, the curing temperature thereof is 200°C, the curing pressure is 30kg/cm² and the curing time is 90min.

### Example 3

100 parts by weight of bis(4-aminophenyl)-p-diisopropylphenyl -tetraglycidyl ether resin Epon HPT 1071(manufactured by Monmentive Corporation, EEW is 150∼170 g/mol) was added into a container, and then 139.4 parts by weight of active ester hardener HPC-8000-65T (manufactured by DIC corporation, Japan, active ester equivalent is 223g/mol) was added and stirred well. 26.6 parts by weight of flame retardant, aluminum phosphinate salt OP930 (manufactured by Clariant corporation, the content of phosphorus is 23%) was added. After stirring uniformly, a proper amount of DMAP and a solvent toluene were added, stirred uniformly to form a varnish. The varnish above was impregnated with glass fiber cloth (model number 2116, the thickness is 0.08mm) and controlled to a proper thickness, and then the solvent was evaporated to obtain a prepreg. Several resulting prepregs were laminated, on both sides of which a copper foil was respectively covered, placed into a hot press and cured to produce the copper-clad laminate. For the copper-clad laminate obtained by curing in the hot press, the curing temperature thereof is 200 °C, the curing pressure is 30kg/cm² and the curing time is 90min.

### Comparative Example 1

100 parts by weight of o-cresol novolac epoxy resin N690 (manufactured by DIC Corporation, Japan, EEW is 205 g/mol) was added into a container, and then 108.8 parts by weight of active ester hardener HPC-8000-65T (manufactured by DIC corporation, Japan, active ester equivalent is 223g/mol) was added and stirred well. 32.5 parts by weight of flame retardant, an aluminum salt of phosphinate OP930 (manufactured by Clariant corporation, the content of phosphorus is 23%) was added. After stirring uniformly, a proper amount of DMAP and a solvent toluene were added, stirred uniformly to form a varnish. The varnish above was impregnated with glass fiber cloth (model number 2116, the thickness is 0.08mm) and controlled to a proper thickness, and then the solvent was evaporated to obtain a prepreg. Several resulting prepregs were laminated, on both sides of which a copper foil was respectively covered, placed into a hot press and cured to produce the copper-clad laminate. For the copper-clad laminate obtained by curing in the hot press, the curing temperature thereof is 200°C, the curing pressure is 30kg/cm² and the curing time is 90min.

### Comparative Example 2

100 parts by weight of 4'4-diaminodiphenylmethane tetraglycidyl amino resin KES-224 (manufactured by KOLON Corporation, Korea, EEW is 125 g/mol) was added into a container, and then 84 parts by weight of linear novolac epoxy resin hardener TD-2090 (hydroxyl equivalent is 105g/mol) was added and stirred well. 24.5 parts by weight of flame retardant, an aluminum salt of phosphinate OP930 (manufactured by Clariant corporation, the content of phosphorus is 23%) was added. After stirring uniformly, a proper amount of DMAP and a solvent toluene were added, stirred uniformly to form a varnish. The varnish above was impregnated with glass fiber cloth (model number 2116, the thickness is 0.08mm) and controlled to a proper thickness, and then the solvent was evaporated to obtain a prepreg. Several resulting prepregs were laminated, on both sides of which a copper foil was respectively covered, placed into a hot press and cured to produce the copper-clad laminate. For

the copper-clad laminate obtained by curing in the hot press, the curing temperature thereof is 200°C, the curing pressure is 30kg/cm² and the curing time is 90min.

### Comparative Example 3

100 parts by weight of o-cresol novolac epoxy resin N690 (manufactured by DIC Corporation, Japan, EEW is 205 g/mol) was added into a container, and then 108.8 parts by weight of active ester hardener HPC-8000-65T (manufactured by DIC corporation, Japan, active ester equivalent is 223g/mol) was added and stirred well. 52.2 parts by weight of ethylene-bis(tetrabromophthalimide) BT-93 (manufactured by Albemarle corporation , the content of bromine is 67.2%) was added. After stirring uniformly, a proper amount of DMAP and a solvent toluene were added, stirred uniformly to form a varnish. The varnish above was impregnated with glass fiber cloth (model number 2116, the thickness is 0.08mm) and controlled to a proper thickness, and then the solvent was evaporated to obtain a prepreg. Several resulting prepregs were laminated, on both sides of which a copper foil was respectively covered, placed into a hot press and cured to produce the copper-clad laminate. For the copper-clad laminate obtained by curing in the hot press, the curing temperature thereof is 200°C, the curing pressure is 30Kg/cm² and the curing time is 90min.

Various physical property data of the copper clad laminates produced in the Examples and Comparative Examples above are shown in table 1.

**Table 1. Physical property data of the copper clad laminates produced in each Example and Comparative Example**

| Component name | Example 1 | Example 2 | Example 3 | Comparative Example 1 | Comparative Example 2 | Comparative Example 3 |
|---|---|---|---|---|---|---|
| Bromine content, % | 0 | 0 | 0 | 0 | 0 | 13.5 |
| Phosphorus content,% | 2.3 | 1.8 | 2.3 | 2.3 | 2.5 | 0 |
| Tg(DMA)/°C | 200 | 215 | 210 | 190 | 215 | 185 |
| Dk (5G) | 3.8 | 3.8 | 38 | 3.9 | 4.4 | 4.0 |
| Df (5G) | 0.008 | 0.0085 | 0.009 | 0.011 | 0.016 | 0.012 |
| moisture-heat resistance | 3/3 | 3/3 | 3/3 | 3/3 | 2/3 | 3/3 |
| flame retardancy | V-0 | V-0 | V-0 | V-1 | V-0 | V-0 |

The properties above are measured by methods as follows:
(1) Glass transition temperature (Tg): measured with DMA test, according to the DMA test method as stipulated under IPC-TM-6502.4.24.
(2) Dielectric constant and dielectric dissipation factor: measured according to SPDR method.
(3) Evaluation of moisture-heat resistance: the baseboard is evaluated after etching the copper foil on the surface of the copper clad laminate; the baseboard is placed in a pressure cooker, and subjected to the treatment of 120°C, 105KPa for 2h; then impregnated in a solder furnace at 288°C. The corresponding time is recorded when the baseboard is stratified and exploded. The evaluation is ended when the baseboard is in the solder furnace for more than 5min with no bubble or stratification occurring.
(4) Flame retardancy: measured according to UL94 standard method.

### Physical property analysis

It can be known from the physical property data in table 1, in Comparative Example 1 wherein the curing was carried out by using nitrogen-free novolac epoxy resin and active ester, the flame retardancy of cured products could not reach V-0 degree using the same amount of phosphorus content, since there is no synergistic effect of phosphorus and nitrogen. In Comparative Example 2 wherein the curing was carried out by using phenolic resin hardener, the dielectric performance of cured products is worse than that using active ester as well as moisture-heat resistance. In Comparative Example 3, the epoxy resin with the same structure was cured by phenolic resin and obtained high glass transition temperature, however the dielectric performance and moisture-heat resistance of which were poor. In Examples 1-3, using nitrogen-containing multifunctional epoxy resin and active ester collectively to carry out the curing, the presence of nitrogen can exhibit a synergistic flame retardant effect together with phosphorus flame retardant, thereby it can reduce the amount of phosphorus as well as the moisture absorption of cured product, the dielectric performance and moisture-heat resistance are excellent, and the glass transition temperature is high.

As above, the epoxy resin composition of the present invention includes an epoxy resin containing nitrogen in the molecular chain, an active ester hardener and a phosphinate salt compound. Compared to a general copper foil baseboard, the copper-clad laminate made by using the epoxy resin composition of the invention possesses more excellent dielectric performance, higher glass transition temperature and has good moisture-heat resistance as well, and it is applicable to the high frequency field.

However, the examples above do not make any restriction on the contents of the composition of the present invention. Any slight alteration, equivalent change and modification according to the technical essence and the components or contents of the composition, all belong to the scope of the technical solution of the present invention.

## Claims

1. An epoxy resin composition, comprising components as follows: an epoxy resin containing 3 or more epoxy groups and nitrogen in the molecular chain, a phosphinate salt compound and an active ester hardener; the amount of the epoxy resin containing 3 or more epoxy groups and nitrogen in the molecular chain is 100 parts by weight, the amount of the phosphinate salt compound is 5-50 parts by weight, the equivalent ratio of the amount of the active ester hardener, based on the ratio between epoxy equivalent and active ester equivalent, is 0.85-1.2; wherein the epoxy resin containing 3 or more epoxy groups and nitrogen in the molecular chain is at least one of the epoxy resins having the following structural formula: 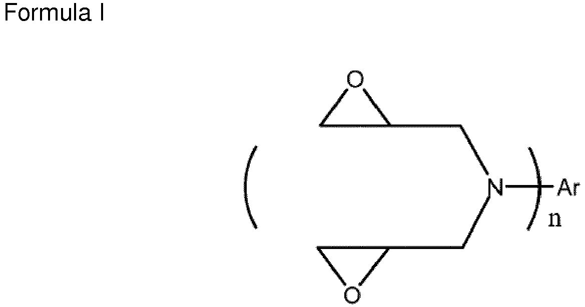 wherein, n is an integer value of 1-3; Ar is: 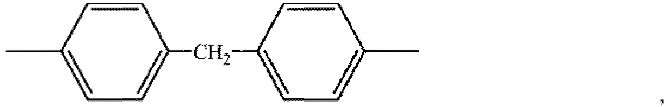 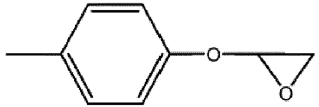 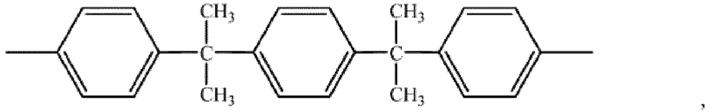 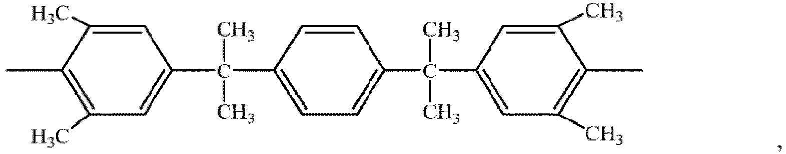 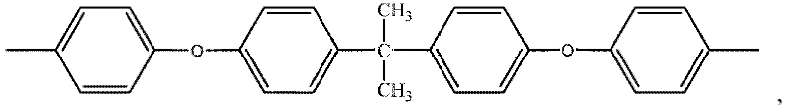 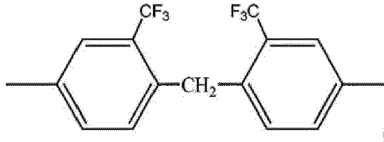 or 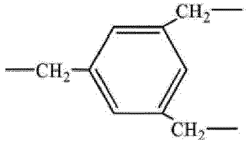 wherein the phosphinate salt compound is a metal ion substituted phosphinate salt, and having the following structural formula III: 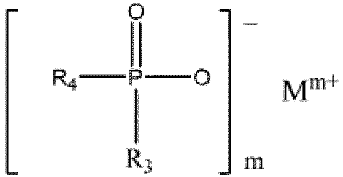 wherein, m is 2 or 3; R₃, R₄ is an alkane group or an aromatic hydrocarbon group with 1-6 carbon atoms; M is a metal atom, which is chosen from one of calcium, magnesium, aluminum, arsenic, zinc , and iron
wherein the structural formula of the active ester hardener is as follow: 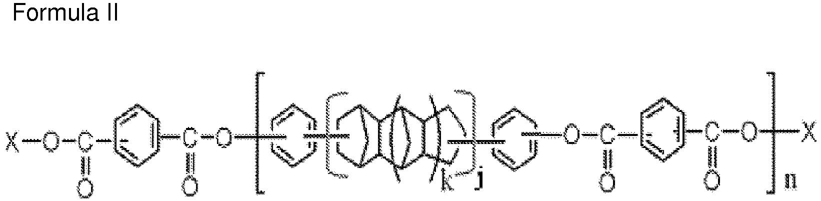 wherein, X is a benzene ring or a naphthalene ring, j is 0 or 1, k is 0 or 1, n is 0.25-2.5.

2. The epoxy resin composition of claim 1, wherein the active ester hardener is obtained by reacting a phenolic compound linked by an aliphatic cyclic hydrocarbon structure, a bifunctional carboxylic acid aromatic compound or an acidic halide and a mono-hydroxyl compound.

3. The epoxy resin composition of claim 2, wherein the amount of the bifunctional carboxylic acid aromatic compound or the acidic halide is 1mol, the amount of the phenolic compound linked by an aliphatic cyclic hydrocarbon structure is 0.05-0.75mol, the amount of the mono-hydroxyl compound is 0.25-0.95mol.

4. The epoxy resin composition of claim 1, further comprising a curing accelerator, the curing accelerator is one or a mixture of imidazole compounds and derivatives thereof, piperidine compounds, Lewis acids, and triphenylphosphine.

5. The epoxy resin composition of claim 1, further comprising an organic filler, an inorganic filler, or a mixture of organic filler and inorganic filler, the amount of the filler, relative to the total 100 parts by weight of the epoxy resin, the active ester hardener and the phosphinate salt compound, is 5-500 parts by weight.

6. The epoxy resin composition of claim 5, wherein the inorganic filler is one or more selected from crystalline silica, melting silica, spherical silica, hollow silica, glass powder, aluminum nitride, boron nitride, silicon carbide, aluminum hydroxide, titanium dioxide, strontium titanate, barium titanate, aluminum oxide, barium sulfate, talcum powder, calcium silicate, calcium carbonate, and mica; the organic filler is one or more selected from polytetrafluoroethylene powder, polyphenylene sulfide, and polyether sulfone powder.

7. A prepreg made by using the epoxy resin composition of claim 1, including a reinforcing material and the epoxy resin composition attached thereon after being impregnated and dried.

8. A copper-clad laminate made by using the prepreg of claim 7, comprising several laminated prepregs and copper foils covered on one or both sides of the laminated prepregs.

## Patentansprüche

1. Epoxidharzzusammensetzung enthaltend die folgenden Komponenten: ein Epoxidharz enthaltend 3 oder mehr Epoxidgruppen und Stickstoff in der molekularen Kette, eine Phosphinatsalzverbindung und einen aktiven Esterhärter; die Menge des Epoxidharzes enthaltend 3 oder mehr Epoxidgruppen und Stickstoff in der molekularen Kette beträgt 100 Gewichtsteile, die Menge der Phosphinatsalzverbindung beträgt 5-50 Gewichtsteile, das Äquivalentverhältnis der Menge des aktiven Esterhärters basierend auf dem Verhältnis zwischen dem Epoxidäquivalent und dem aktiven Esteräquivalent beträgt 0,85 - 1,2, wobei das Epoxidharz enthaltend 3 oder mehr Epoxidgruppen und Stickstoff in der molekularen Kette mindestens eines der Epoxidharze mit der folgenden Strukturformel ist: 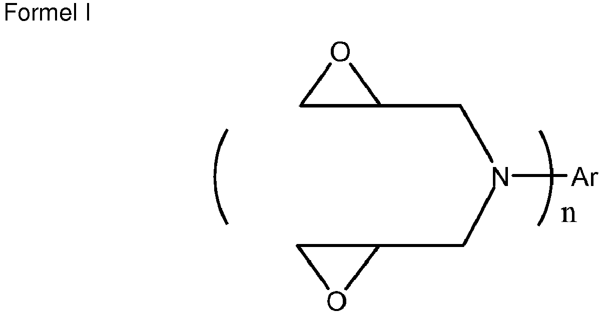 wobei n eine ganze Zahl von 1 - 3 ist; Ar ist: 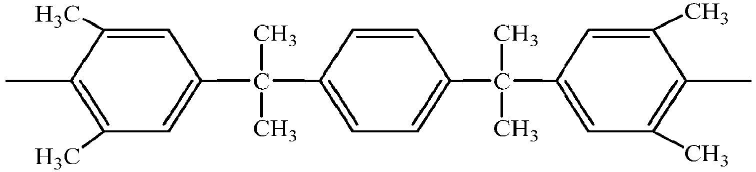 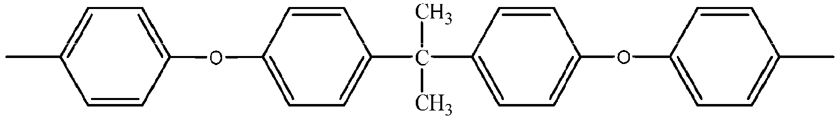 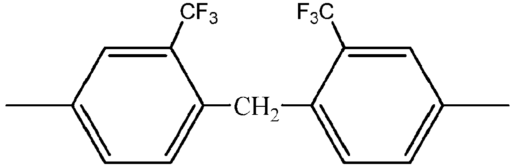 oder 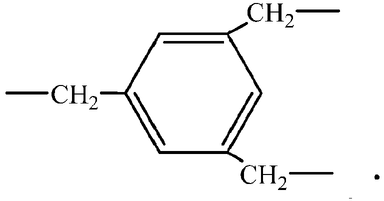 wobei die Phosphinatsalzverbindung ein Metallionen-substituiertes Phosphinatsalz ist und die folgende Strukturformel III hat: 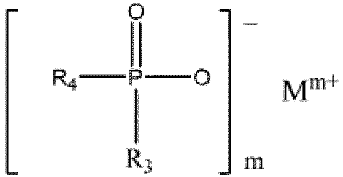 wobei m 2 oder 3 ist; R₃, R₄ eine Alkangruppe oder eine aromatische Kohlenwasserstoffgruppe mit 1 bis 6 Kohlenstoffatomen ist; M ein Metallatom ist, welches ausgewählt wird aus einem von Kalzium, Magnesium, Aluminium, Arsen, Zink und Eisen wobei die Strukturformel des aktiven Esterhärters wie folgt ist: 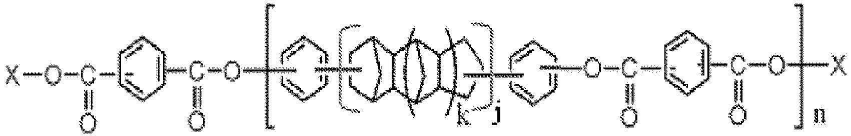 wobei X ein Benzolring oder ein Naphthalenring ist, j 0 oder 1 ist, k 0 oder 1 ist, n 0,25-2,5 ist.

2. Epoxidharzzusammensetzung nach Anspruch 1, wobei der aktive Esterhärter erhalten wird durch Reaktion einer phenolischen Verbindung verbunden mit einer aliphatischen, zyklischen Kohlenwasserstoffstruktur, einer bifunktionalen aromatischen Carbonsäureverbindung oder einem sauren Halogenid und einer Monohydroxyverbindung.

3. Epoxidharzzusammensetzung nach Anspruch 2, wobei die Menge der bifunktionalen aromatischen Carbonsäureverbindung oder dem sauren Halogenid 1 mol ist, die Menge der phenolischen Verbindung verbunden mit einer aliphatischen zyklischen Kohlenwasserstoffstruktur 0,05-0,75 mol ist, die Menge der Monohydroxyverbindung 0,25-0,95 mol ist.

4. Epoxidharzzusammensetzung nach Anspruch 1 ferner enthaltend einen Härtungsbeschleuniger, der Härtungsbeschleuniger ist einer oder eine Mischung von Imidazolverbindungen und Derivaten davon, Piperidinverbindungen, Lewissäuren, und Triphenylphosphin.

5. Epoxidharzzusammensetzung nach Anspruch 1, ferner enthaltend einen organischen Füllstoff, einen anorganischen Füllstoff oder eine Mischung eines organischen Füllstoffs und eines anorganischen Füllstoffs, die Menge des Füllstoffs relativ zu den gesamten 100 Gewichtsteilen des Epoxidharzes, des aktiven Esterhärters und der Phosphinatsalzverbindung ist 5-500 Gewichtsteile.

6. Epoxidharzzusammensetzung nach Anspruch 5, wobei der anorganische Füllstoff gewählt ist aus einem oder mehreren von kristallinem Siliziumdioxid, geschmolzenem Silica, sphärischem Silica, hohlem Silica, Glaspulver, Aluminiumnitrid, Bornitrid, Siliciumcarbid, Aluminiumhydroxid, Titandioxid, Strontiumtitanat, Bariumtitanat, Aluminiumoxid, Bariumsulfat, Talkumpulver, Kalziumsilicat, Kalziumcarbonat und Glimmer; der organische Füllstoff ist einer oder mehrere ausgewählt aus Polytetrafluoroethylen-Pulver, Polyphenylensulfid und Polyethersulfon-Pulver

7. Prepreg hergestellt unter Verwendung der Epoxidharzzusammensetzung nach Anspruch 1, umfassend ein Verstärkungsmaterial und die daran nach Imprägnieren und Trocknen gebundene Epoxidharzzusammensetzung.

8. Kupferkaschiertes Laminat hergestellt unter Verwendung des Prepregs nach Anspruch 7, umfassend mehrere laminierte Prepregs, die auf einer oder beiden Seiten mit Kupferfolien bedeckt sind.

## Revendications

1. Composition de résine époxy, comprenant les composants suivants : une résine époxy contenant 3 groupes époxy ou plus et de l'azote dans la chaîne moléculaire, un composé de sel de phosphinate et un durcisseur d'ester actif ; la quantité de la résine époxy contenant 3 groupes époxy ou plus et de l'azote dans la chaîne moléculaire est de 100 parties en poids, la quantité du composé de sel de phosphinate est de 5 à 50 parties en poids, le rapport équivalent de la quantité du durcisseur d'ester actif, par rapport au rapport entre l'équivalent époxy et l'équivalent ester actif est de 0,85 à 1,2 ; dans laquelle la résine époxy contenant 3 groupes époxy ou plus et l'azote dans la chaîne moléculaire est au moins l'une des résines époxy ayant la formule développée suivante : 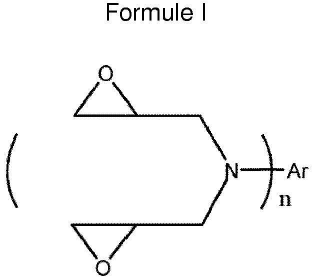 dans laquelle, n est une valeur entière de 1 à 3 ; Ar est : 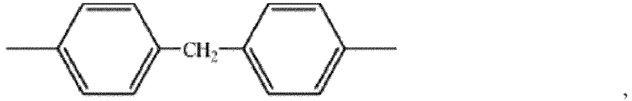 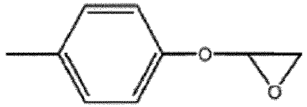 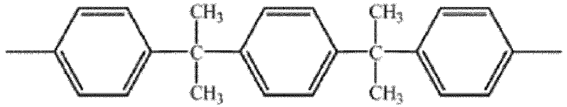 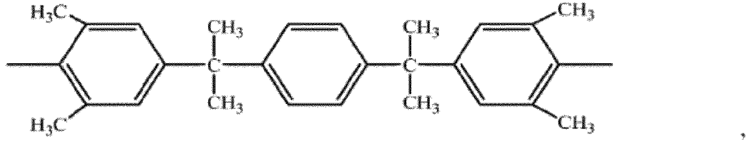 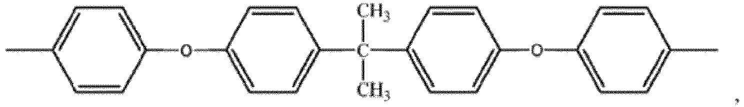 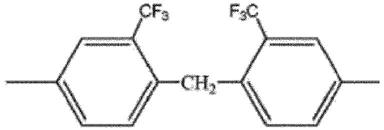 ou 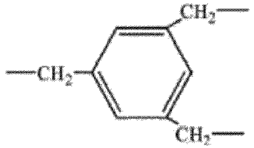 dans laquelle le composé de sel de phosphinate est un sel de phosphinate substitué par ion de métal, et ayant la formule développée III suivante : 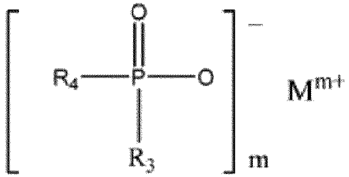 dans laquelle, m vaut 2 ou 3 ; R₃, R₄ est un groupe alcane ou un groupe hydrocarbure aromatique avec 1 à 6 atomes de carbone ; M est un atome de métal, qui est choisi parmi le calcium, le magnésium, l'aluminium, l'arsenic, le zinc, et le fer
dans laquelle la formule développée du durcisseur d'ester actif est comme suit : 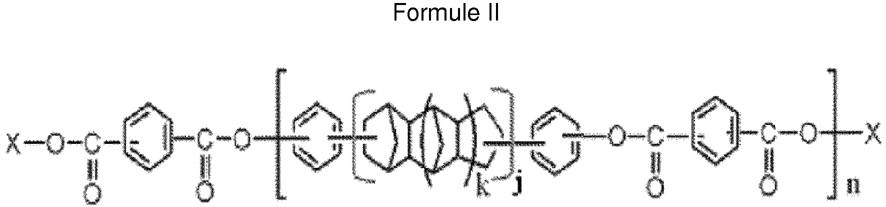 dans laquelle, X est un cycle benzène ou un cycle naphtalène, j vaut 0 ou 1, k vaut 0 ou 1, n vaut de 0,25 à 2,5.

2. Composition de résine époxy selon la revendication 1, dans laquelle le durcisseur d'ester actif est obtenu par la mise en réaction d'un composé phénolique lié par une structure hydrocarbonée cyclique aliphatique, d'un composé aromatique d'acide carboxylique bifonctionnel ou d'un halogénure acide et d'un composé mono-hydroxyle.

3. Composition de résine époxy selon la revendication 2, dans laquelle la quantité du composé aromatique d'acide carboxylique bifonctionnel ou de l'halogénure acide est de 1 mole, la quantité du composé phénolique lié par une structure hydrocarbonée cyclique aliphatique est de 0,05 à 0,75 mole, la quantité du composé mono-hydroxyle est de 0,25 à 0,95 mole.

4. Composition de résine époxy selon la revendication 1, comprenant en outre un accélérateur de durcissement, l'accélérateur de durcissement est l'un ou un mélange de composés imidazole et leurs dérivés, composés pipéridine, acides de Lewis et triphénylphosphine.

5. Composition de résine époxy selon la revendication 1, comprenant en outre une charge organique, une charge inorganique, ou un mélange de charge organique et de charge inorganique, la quantité de la charge, par rapport à la totalité de 100 parties en poids de la résine époxy, du durcisseur d'ester actif, et du composé de sel de phosphinate, est de 5 à 500 parties en poids.

6. Composition de résine époxy selon la revendication 5, dans laquelle la charge inorganique est un ou plusieurs éléments choisis parmi la silice cristalline, la silice de fusion, la silice sphérique, la silice creuse, la poudre de verre, le nitrure d'aluminium, le nitrure de bore, le carbure de silicium, l'hydroxyde d'aluminium, le dioxyde de titane, le titanate de strontium, le titanate de baryum, l'oxyde d'aluminium, le sulfate de baryum, la poudre de talc, le silicate de calcium, le carbonate de calcium et le mica ; la charge organique est un ou plusieurs éléments choisis parmi la poudre de polytétrafluoroéthylène, le polysulfure de phénylène, et la poudre de polyéther sulfone.

7. Préimprégné réalisé en utilisant la composition de résine époxy de la revendication 1, comportant un matériau de renforcement et la composition de résine époxy attachée sur celui-ci après avoir été imprégnée et séchée.

8. Stratifié cuivré réalisé en utilisant le préimprégné de la revendication 7, comprenant plusieurs préimprégnés stratifiés et des feuilles de cuivre recouvertes sur l'un ou les deux côtés des préimprégnés stratifiés.
